# EUROPÄISCHE PATENTSCHRIFT

(11) **EP 1 014 733 B1**
(45) Veröffentlichungstag und Bekanntmachung des Hinweises auf die Patenterteilung: **16.03.2005**
(21) Anmeldenummer: 99123976.5
(22) Anmeldetag: 03.12.1999
(51) Int. Cl.: H04Q 3/00, H04M 3/22

(54) **Verfahren zum Abhören eines Teilnehmers eines Intelligenten Netzes**
Method for monitoring a subscriber in an intelligent network
Procédé d'écoutes légales d'un abonné dans un réseau intelligent

(30) Priorität: 03.12.1998 DE 19855921
(43) Veröffentlichungstag der Anmeldung: 28.06.2000
(73) Patentinhaber: SIEMENS AKTIENGESELLSCHAFT, 80333 München (DE)
(72) Erfinder: Gundlach, Michael, Dr., 81739 München (DE)

(56) Entgegenhaltungen:
- WO-A-97/41678
- US-A- 5 590 171

## Beschreibung

Die Erfindung betrifft ein Verfahren zum Abhören einer Kommunikationsverbindung, insbesondere eines Telefongesprächs, zwischen zwei Kommunikationsteilnehmern, von denen mindestens einer ein zu überwachender Teilnehmer ist, wobei das Identifizierungskennzeichen (also z. B. die IN-Rufnummer oder die Personal User Identity") des bzw. eines zu überwachenden Teilnehmers oder der zu überwachenden Teilnehmer gekennzeichnet wird, und diese Kennzeichnung eine Angabe darüber enthält, welcher dritte bzw. welche dritten Kommunikationsteilnehmer zum Abhören einer Kommunikationsverbindung mit diesem zu überwachenden Teilnehmer berechtigt sein soll bzw. sollen. Wird ein zu überwachender Teilnehmer angerufen oder ruft er einen zweiten Kommunikationsteilnehmer an, wird eine Konferenzschaltung des zu überwachenden Teilnehmers und des anrufenden bzw. angerufenen zweiten Kommunikationsteilnehmers mit einem zum Abhören berechtigten dritten Kommunikationsteilnehmer aufgebaut.

Nationale und internationale Gesetze verlangen von Betreibern eines öffentlichen und in Zukunft voraussichtlich auch eines privaten Netzes, den sogenannten Bedarfsträgern (Kriminalpolizei, Geheimdienst, etc.), unter Beachtung gewisser gesetzlicher Vorschriften zum Schutz der Kommunikationsteilnehmer (z. B. richterliche Genehmigung), den Fernmeldeverkehr verdächtiger Personen zu überwachen. Während dies bei klassischen Telefondiensten im Festnetz in der lokalen Vermittlungsstelle des zu überwachenden Teilnehmers durch Kennzeichnung des entsprechenden Teilnehmerdatensatzes und Einrichtung einer Art Konferenzschaltung zum Bedarfsträger relativ einfach möglich ist, besteht bei Intelligenten Netzen (IN) eine prinzipielle Schwierigkeit. Diese ergibt sich aus der Funktionsaufteilung von Signalisierung und Sprechverkehr auf verschiedene Netzkomponenten. Bei IN-Calls ist im allgemeinen vorab nicht festgelegt, über welche Vermittlungsstellen (VSt) Gespräche eines zu überwachenden Teilnehmers laufen. Ferner stehen nicht alle zur Überwachung erforderlichen Daten (u.a. IN-Nummern und Festnetz-Rufnummern der Kommunikationspartner) am selben Ort zur Verfügung.

In WO 97/41678 wird bereits ein Verfahren zum Abhören einer Kommunikationsverbindung angegeben, welches für Kommunikationsdienste mit IN-Diensten geeignet ist.

In US 5 590 171 wird ein Verfahren zum Abhören, einer Kommunikationsverbindung angegeben, bei dem ein überwachender Teilnehmer entscheidet, ob die Überwachung tatsächlich eingeschaltet wird.

Aufgabe der Erfindung ist es, ein verbessertes Verfahren zum Abhören einer Kommunikationsverbindung anzugeben.

Diese Aufgabe wird mittels des in Patentanspruch 1 definierten Verfahrens gelöst.

Da das Abhören einer Kommunikationsverbindung für den Bedarfsträger nur interessant ist, wenn tatsächlich über diese Verbindung kommuniziert wird, wird erfindungsgemäß bedarfsgesteuert zwischen zwei (oder auch mehreren) unterschiedlichen Abhörverfahren unterschieden. Der wesentliche Vorteil gegenüber dem bereits beschriebenen Verfahren ist die Reduzierung der Belastung des Kommunikationsnetzes (SS7/INAP Schnittstelle und Vermittlungsstelle).

Vorteilhafte Ausgestaltungen und Weiterbildungen sind in den Unteransprüchen angegeben.

Das aus WO 97/41678 bekannte Verfahren wird erfindungsgemäß nur verwendet, wenn tatsächlich Kommunikation über die Kommunikationsverbindung geschieht, sogenannte "call related activity". Dies kann ermittelt werden durch die Art des Zugriffes, der auf den SCP geschieht. Dabei ist es unerheblich, ob es sich bei dem Kommunikationspartner um eine weitere Person oder auch um eine technische Einrichtung, wie eine Mailbox handelt. In diesem Fall wird wie folgt vorgegangen:
1. Der zu überwachende Teilnehmer ist IN-Teilnehmer.
   (a) Die IN-Nummer des zu überwachende Teilnehmers wird im Service Control Point (SCP) gekennzeichnet. Diese Kennzeichnung enthält eine Angabe darüber, welche Bedarfsträger eine Abhörmöglichkeit erhalten.
   (b) In einer Erweiterung des IN-spezifischen Protokolls zwischen dem SCP und dem Service Switching Point (SSP) (in der Regel in der Transit-Vermittlungsstelle (TE) des anrufenden Teilnehmers) wird der SSP informiert, daß und von wem das entsprechende Telefonat zu überwachen ist.
   (c) Von der Vermittlungsstelle, in der der SSP liegt, wird eine Konferenzschaltung zum Bedarfsträger aufgebaut. Diesem werden die Verbindungsdaten (Festnetz-Rufnummern, IN-Nummern, Zeit, Dauer des Gesprächs) und der Inhalt des Gesprächs bzw. der Datenverbindung online übermittelt.
2.Der Kommunikationspartner des zu überwachende Teilnehmers ist IN-Teilnehmer.
   (a) Die Rufnummer des zu überwachenden Teilnehmers wird in der Vermittlungsstelle dieses Teilnehmers gekennzeichnet. Diese Kennzeichnung enthält eine Angabe darüber, welche Bedarfsträger eine Abhörmöglichkeit erhalten. Ist der zu überwachende Teilnehmer ein Teilnehmer im klassischen Sinn, d. h. kein IN-Teilnehmer, so erfolgt diese Kennzeichnung einmalig in der Orts-Vermittlungsstelle dieses Teilnehmers. Ist der zu überwachende Teilnehmer ein IN-Teilnehmer, so erfolgt die Kennzeichnung gemäß 1.
   (b) Die in (a) genannte Vermittlungsstelle fordert vom SSP des Kommunikationspartners die in der VSt nicht vorliegenden Daten an (z. B. die IN-Nummer oder die Festnetz-Rufnummer des Kommunikationspartners).
   (c) Die Vermittlungsstelle baut eine Konferenzschaltung zum Bedarfsträger auf. Diesem werden die Verbindungsdaten (Festnetz-Rufnummern, IN-Nummern, Zeit, Dauer des Gesprächs) und der Inhalt des Gesprächs bzw. der Datenverbindung online übermittelt.

Im anderen Fall, wenn keine Kommunikation erfolgt, erzeugt das oben beschriebene Vorgehen eine hohe Belastung des Kommunikationsnetzes. Dies ist zum Beispiel der Fall, wenn von dem abzuhörenden Teilnehmer ein IN-Dienst administriert wird, zum Beispiel das Einrichten oder Ändern einer Anrufumleitung (call unrelated activity). Hier ist es vollkommen ausreichend, wenn nur die Ereignisdaten vom SCP an den Bedarfsträger übermittelt werden, ohne die zugehörige Vermittlungsstelle einzuschalten.

Einschränkungen in den Figuren und Ausführungsbeispielen sind für die Erfindung nicht zwingend.

Im folgenden wird die Erfindung anhand von einem Ausführungsbeispiel erläutert. Dabei zeigen
- Figur 1: die prinzipielle Architektur mit überwachtem IN-Teilnehmer und
- Figur 2: die Auswahllogik im SCP.

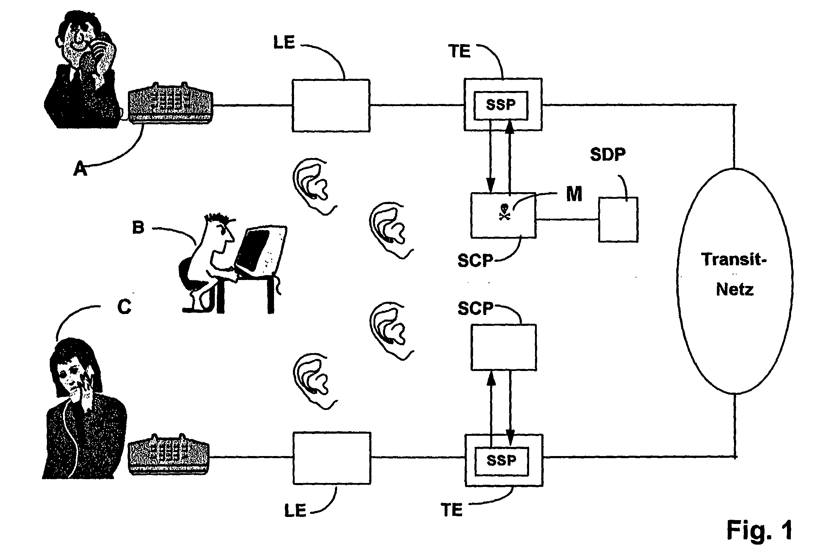

Im folgenden wird das Ablaufprotokoll für das in Figur 1 dargestellte Beispiel beschrieben.

Der zu überwachende Teilnehmer A ist IN-Teilnehmer und ruft einen Kommunikationspartner C an, z. B. als Outgoing UPT Call.
1. Auf Anordnung des Bedarfsträgers B wird im SCP die IN-Nummer A als zu Überwachen gekennzeichnet (einmaliger Vorgang).
2. A macht einen Outgoing UPT Call und wählt die Rufnummer von C. Der Anruf wird vermittelt (über LE) und landet schließlich bei einer Vermittlungsstelle TE mit Service Switching Point SSP.
3. Der SSP in der Vermittlungsstelle TE übermittelt die IN-Nummer von A an den zuständigen Service Control Point SCP.
4. Die Service Data Function (SDF) im SCP überprüft die zur übermittelten IN-Nummer gehörenden Daten, unter anderem:
   - Vergebührungsinformation;
   - Kennzeichnung, daß der Teilnehmer zu überwachen ist;
   - Identität des überwachenden Bedarfsträgers.
5. Handelt es sich um einen Anruf zum Zweck der Kommunikation, so sendet der SCP diese Daten an den SSP in der Vermittlungsstelle TE. Anderenfalls werden vom SCP lediglich die Ereignisdaten ohne Einschaltung der Vermittlungsstelle TE an den Bedarfsträger B übermittelt.
6. Hat die Vermittlungsstelle vom SCP Daten erhalten, so stellt sie eine Verbindung sowohl zu C als auch zum Bedarfsträger B her.
7. Die geforderten Daten (z. B. Festnetz-Rufnummern und IN-Nummer, Zeit und Dauer der Verbindung) und das laufende Telefongespräch (bzw. die Datenübertragung) werden an den Bedarfsträger übertragen, unmerkbar für A und C.

Der zu überwachende Teilnehmer A ist IN-Teilnehmer und wird von seinem Kommunikationspartner C angerufen.
1. Auf Anordnung des Bedarfsträgers B wird im SCP die IN-Nummer von A als zu Überwachen gekennzeichnet (einmaliger Vorgang). Dies kann auch mit Hilfe des Service Management Points SMP geschehen.
2. C wählt die IN-Nummer von A.
3. Der Service Switching Point SSP übermittelt die IN-Nummer an den zuständigen Service Control Point SCP.
4. Die Service Data Function (SDF) im SCP überprüft die zur übermittelten IN-Nummer gehörenden Daten, unter anderem:
   - Festnetz-Rufnummer;
   - Kennzeichnung, daß der Teilnehmer zu überwachen ist;
   - Identität des überwachenden Bedarfsträgers.
5. Handelt es sich um einen Anruf zum Zweck der Kommunikation, sendet der SCP diese Daten an den SSP in der Vermittlungsstelle TE. Anderenfalls werden vom SCP lediglich die Ereignisdaten ohne Einschaltung der Vermittlungsstelle TE an den Bedarfsträger B übermittelt.
6. Die Vermittlungsstelle stellt aufgrund dieser Daten eine Verbindung sowohl zu A als auch zum Bedarfsträger B her.
7. Die geforderten Daten (z. B. Festnetz-Rufnummern, Zeit und Dauer der Verbindung) und das laufende Telefongespräch (bzw. die Datenübertragung) werden von der Vermittlungsstelle TE an den Bedarfsträger B übertragen, unmerkbar für A und C.

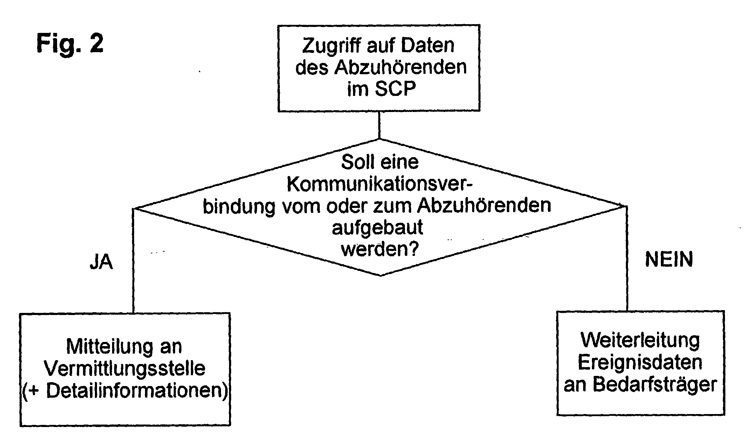

In Figur 2 ist die Auswahllogik dargestellt, nach der der SCP entscheidet, welches Abhörverfahren verwendet werden soll. Dabei folgt die Art der Kommunikationsverbindung, also ob sie zum Zweck der Kommunikation oder etwa zum Zweck der Modifikation einer Anrufumleitung aufgebaut wird, aus der Art des Zugriffs im SCP.

### Abkürzungsverzeichnis

- A: Überwachter Teilnehmer
- B: Bedarfsträger
- C: Kommunikationspartner
- IN: Intelligentes Netz
- INAP: Intelligent Network Application Part
- LE: Local Exchange (Ortsvermittlung)
- M: Markierung
- SCP: Service Control Point
- SDP: Service Data Point
- SS7: Zentralkanalsignalisierungssystem Nr. 7
- SSP: Service Switching Point
- TE: Transit Exchange (Transitvermittlung)

## Patentansprüche

1. Verfahren zum Abhören eines Teilnehmers eines Intelligenten Netzes (A), bei dem
a) ein Identifizierungskennzeichen des zu überwachenden Teilnehmers in einer zentralen Datenbasis (SDP) wird **gekennzeichnet**, wobei diese Kennzeichnung (M) eine Angabe enthält über mindestens einen dritten Kommunikationsteilnehmer (B), der zum Abhören von Kommunikationsverbindungen dieses zu überwachenden Teilnehmer (A) berechtigt ist;
b) über eine Vermittlungsstelle (TE) wird eine Verbindungsanfrage von dem oder zu dem zu überwachenden Teilnehmer (A) durchgeführt, und
c) von der Vermittlungsstelle (TE) die Anfrage an die zentrale Steuerung des Intelligenten Netzes (SCP) übermittelt **wird**, um von der zentralen Steuerung abhängig von der Art des Zugriffs auf die **zentrale** Steuerung (SCP), eine Entscheidung treffen zu lassen, ob eine Überwachung des zu überwachenden Kommunikationsteilnehmers (A) durch die Vermittlungsstelle (TE) initiiert wird, und
d) wenn die Entscheidung getroffen wurde, eine Überwachung **zu initiieren**, von der Vermittlungsstelle (TE), die die **Anfrage an die zentrale Steuerung** (SCP) **übermittelt hat**, eine Konferenzschaltung des zu überwachenden Teilnehmers (A) und des anrufenden bzw. angerufenen zweiten Kommunikationsteilnehmer (C) mit dem mindestens einen zum Abhören berechtigten dritten Kommunikationsteilnehmer (B) aufgebaut **wird**; und
e) für den zu überwachenden Teilnehmer (A) charakteristische Teilnehmerdaten an den mindestens einen berechtigten dritten Kommunikationsteilnehmer (B) übermittelt werden.

2. Verfahren nach Patentanspruch 1, **dadurch gekennzeichnet, dass**
die Initiierung der Überwachung in einer Vermittlungsstelle (TE) nur erfolgt, wenn
**der** zu überwachender Teilnehmer (A) **von dem zweiten Kommunikationsteilnehmer (C)** angerufen wird oder **den** zweiten Kommunikationsteilnehmer (C) anruft.

3. Verfahren nach Patentanspruch 1 oder 2,
**dadurch gekennzeichnet, dass**
**Ereignisdaten und** die charakteristischen Teilnehmerdaten direkt von der zentralen Steuerung des Intelligenten Netzes (SCP) an den dritten, zum Abhören berechtigten Kommunikationsteilnehmer (B) übertragen werden,
wenn ein Zugriff erfolgt, auf die zentrale Datenbasis, ohne dass der zu überwachende Teilnehmer (A) eine andere Rufnummer wählt oder angerufen wird, d. h. keine Kommunikation zwischen dem zu überwachenden Teilnehmer (A) und mindestens einem weiteren Teilnehmer (C) über die Vermittlungsstelle (TE) geschieht.

## Claims

1. Method for monitoring a subscriber in an intelligent network (A), in which
a) an identifier of the subscriber to be monitored in a central database (SDP) is flagged, with said flag (M) containing details of at least one third communication subscriber (B), which is authorised to monitor communication connections of this subscriber to be monitored (A);
b) a connection is requested from or to the subscriber to be monitored (A) via a switching centre (TE);
c) the request is transmitted from the switching centre (TE) to the central control point of the intelligent network (SCP), for a decision to be made by the central control point as a function of the nature of the access to the central control point (SCP) whether monitoring of the communication subscriber to be monitored (A) should be initiated by the switching centre (TE) and
d) if the decision was made to initiate monitoring, a conference circuit comprising the subscriber to be monitored (A) and the calling or called second communication subscriber (C) with the at least one third communication subscriber authorised to carry out the monitoring operation (B) is set up by the switching centre (TE), which transmitted the request to the central control point (SCP); and
e) characteristic subscriber data for the subscriber to be monitored (A) is transmitted to the at least one third communication subscriber (B) authorised to carry out the monitoring operation.

2. Method according to Claim 1,
**characterised in that** monitoring is only initiated in a switching centre (TE), when
the subscriber to be monitored (A) is called by the second communication subscriber (C) or calls the second communication subscriber (C).

3. Method according to Claim 1 or 2,
**characterised in that** event data and characteristic subscriber data is transmitted directly from the central control point of the intelligent network (SCP) to the third communication subscriber authorised to carry out the monitoring operation (B),
when the central database is accessed without the subscriber to be monitored (A) dialling another call number or being called, i.e. no communication takes place between the subscriber to be monitored (A) and at least one further subscriber (C) via the switching centre (TE).

## Revendications

1. Procédé d'écoute d'un abonné (A) dans un réseau intelligent, dans lequel
a) une caractéristique d'identification de l'abonné à surveiller est **caractérisée** dans une base centrale de données (SDP), cette caractérisation (M) contenant une donnée sur au moins un troisième participant à la communication (B) qui est autorisé à écouter les communications de cet abonné à surveiller (A),
b) par l'intermédiaire d'un central téléphonique (TE), une demande de liaison est effectuée par l'abonné à surveiller (A) ou vers celui-ci,
c) la demande est transmise par le central téléphonique (TE) à la commande centrale du réseau intelligent (SCP) pour que la commande centrale décide, en fonction de la requête à la commande centrale (SCP), si le central téléphonique (TE) doit lancer ou non une surveillance de l'abonné (A) à surveiller,
d) lorsque la décision de lancer une surveillance est prise, le central téléphonique (TE) qui a transmis la demande à la commande centrale (SCP) établit une liaison de conférence entre l'abonné à surveiller (A), le deuxième participant à la communication (C), qui appelle ou est appelé et l'au moins un troisième participant à la communication (B), qui est autorisé à écouter et
e) des données d'abonné caractéristiques pour l'abonné à surveiller (A) sont transmises à l'au moins un troisième participant à la communication (B) qui est autorisé.

2. Procédé selon la revendication 1, **caractérisé en ce que** la surveillance n'est lancée dans un central téléphonique (TE) que si l'abonné à surveiller (A) est appelé par le deuxième participant à la communication (C) ou appelle le deuxième participant à la communication (C).

3. Procédé selon la revendication 1 ou 2, **caractérisé en ce que** des données d'événement et les données d'abonné caractéristiques sont transmises directement par la commande centrale du réseau intelligent (SCP) au troisième participant à la communication (B) qui est autorisé à écouter, lorsqu'une requête est effectuée à la base centrale de données sans que l'abonné à surveiller (A) choisisse un autre numéro d'appel ou soit appelé, c'est-à-dire lorsqu'aucune communication entre l'abonné à surveiller (A) et au moins un autre abonné (C) n'a lieu par le central téléphonique (TE).
